# Europäisches Patentamt

# European Patent Office

# Office européen des brevets

(19)

(11) Numéro de publication: **0078192 B1**

## (12) FASCICULE DE BREVET EUROPEEN

(45) Date de publication du fascicule du brevet:
14.08.85

(51) Int. Cl.⁴: **G 21 C 15/18**

(21) Numéro de dépôt: **82401892.3**

(22) Date de dépôt: **15.10.82**

(54) Dispositif d'injection de sécurité d'un réacteur nucléaire à eau sous pression.

(30) Priorité: 16.10.81 FR 8119478

(43) Date de publication de la demande:
04.05.83 Bulletin 83/18

(45) Mention de la délivrance du brevet:
14.08.85 Bulletin 85/33

(84) Etats contractants désignés:
BE DE FR GB IT

(56) Documents cités:
DE - A - 2 346 483
FR - A - 2 172 152
FR - A - 2 251 884
FR - A - 2 268 333
GB - A - 926 615
GB - A - 1 258 046

ATOMKERNENERGIE, vol. 32, no. 4, 1978, Munich (DE)
F. MAYINGER: "Entwicklungen und Kenntnisstand bei
der Notkühlanalyse von Leichtwasserreaktoren", pages
220-226
KERNTECHNIK, vol. 17, no. 4, 1975, Munich (DE) E.
DRESSLER et al.: "Zuverlässigkeitsuntersuchung von
Sicherheitssystemen des Kernkraftwerks Biblis, Block A
Reliability analysis of engineered safety features of Unit
A of the Biblis nuclear power station", pages 160-167

(73) Titulaire: **FRAMATOME ET CIE., Tour Fiat 1, Place de la
Coupole, F-92400 Courbevoie (FR)**

(72) Inventeur: **Vilain, Michel, 16 avenue Charles de Gaulle,
F-78230 Le Pecq (FR)**
Inventeur: **Esayan, Mariana, 33, avenue Victor Hugo,
F-92400 Courbevoie (FR)**

(74) Mandataire: **Lavoix, Jean et al, c/o Cabinet
Lavoix 2, Place D'Estienne D'Orves, F-75441 Paris
Cedex 09 (FR)**

## Description

L'invention concerne un dispositif d'injection de sécurité d'un réacteur nucléaire à eau sous pression, pour l'injection d'eau dans le circuit primaire en cas de fuite dans ce circuit.

Le circuit primaire d'un réacteur nucléaire à eau sous pression en cours de fonctionnement renferme de l'eau contenant de l'acide borique à une pression voisine de 155 bar qui sert à la fois au refroidissement du cœur du réacteur disposé dans la cuve et au contrôle de la réactivité de ce cœur. Le circuit primaire du réacteur comporte plusieurs boucles, généralement trois ou quatre, sur chacune desquelles est placé un générateur de vapeur qui permet la vaporisation de l'eau alimentaire en utilisant la chaleur du cœur du réacteur transportée par l'eau sous pression du circuit primaire.

Chacune des boucles du circuit primaire comporte une portion de canalisation appelée branche froide en communication avec l'intérieur de la cuve du réacteur et amenant l'eau primaire à l'intérieur de cette cuve où elle entre en contact avec le cœur du réacteur ainsi qu'une portion de canalisation, appelée branche chaude, également en communication avec l'intérieur de la cuve du réacteur, par laquelle l'eau échauffée au contact du cœur est évacuée vers les générateurs de vapeur.

Si le circuit primaire présente une fuite, il est nécessaire de compenser celle-ci par une injection d'eau additionnelle dans ce circuit. Dans le cas d'une fuite très importante et, par exemple, dans le cas d'une rupture franche d'une conduite du circuit primaire, il est nécessaire d'envoyer de très grandes quantités de liquide de refroidissement constitué par de l'eau additionnée d'acide borique, en un temps très court, pour éviter une élévation de température très importante du cœur pouvant conduire à une fusion de celui-ci.

Dans le cas de fuites importantes, il est nécessaire de mettre en œuvre un dispositif de refroidissement de secours du réacteur par injection de liquide de refroidissement appelé système d'injection de sécurité.

Un tel dispositif d'injection de sécurité comporte au moins deux trains d'injection constitués chacun par une réserve d'eau additionnée d'acide borique et au moins un ensemble de moyens de pompage à une ou plusieurs pressions différentes, disposés à l'intérieur de l'enceinte de sécurité du réacteur. Ce dispositif d'injection de sécurité comporte également des accumulateurs disposés à l'intérieur de l'enceinte de sécurité du réacteur, contenant de l'eau de refroidissement sous pression et susceptible d'injecter très rapidement une première quantité d'eau dans les branches froides du circuit primaire du réacteur.

Chacun des trains d'injection du dispositif de sécurité comporte autant de conduites d'injection recevant l'eau d'un moyen de pompage qu'il existe de moyens de pompage à des pressions différentes dans le train considéré. C'est ainsi que chacun des trains peut comporter, par exemple, à la fois des pompes basse pression, moyenne pression et haute pression. Dans ce cas, le train d'injection comportera trois conduites d'injection, appelées conduites principales, traversant l'enceinte de sécurité du réacteur et reliées chacune, à l'intérieur de l'enceinte de sécurité, à un barillet de distribution permettant de répartir l'eau injectée dans les différentes branches froides du circuit primaire. Sur chacune des conduites principales d'injection est disposée une vanne de sectionnement à l'extérieur de l'enceinte de sécurité du réacteur.

A la sortie des barillets, la répartition de l'eau d'injection dans les différentes branches froides du circuit primaire est effectuée grâce à des conduites de distribution sur lesquelles sont disposés des clapets anti-retour permettant d'éviter le retour de l'eau du circuit primaire vers les barillets.

On dispose à l'intérieur de l'enceinte, dans le cas de trains d'injection comportant des pompes basse, moyenne et haute pressions, trois barillets recueillant et répartissant l'eau des conduites principales de chacun des trains reliées respectivement aux moyens de pompage, basse, moyenne et haute pressions.

Dans le cas d'une rupture d'une branche froide du circuit primaire, la concentration en acide borique dans le liquide de refroidissement se trouvant dans la cuve augmente de façon continue, lors de la première phase d'injection dans les branches froides. En effet, pendant cette injection, la vapeur produite lors du refroidissement du cœur est relachée dans l'enceinte de sécurité du réacteur. Cette vapeur entraîne une faible quantité d'acide borique, si bien que la concentration en acide borique du liquide restant dans la cuve a tendance à augmenter de façon continue, alors que la concentration dans la réserve de liquide de refroidissement qui est recyclé diminue de façon continue.

Il est alors nécessaire d'opérer une injection par les branches chaudes du circuit primaire pour chasser le liquide de refroidissement à forte concentration en acide borique de la cuve et faire cesser la vaporisation. Le sens de circulation dans la cuve s'inverse alors et le liquide de refroidissement injecté peut s'échapper après mélange par la brèche de la branche froide, sous forme liquide.

Pour effectuer cette injection dans les branches chaudes, de façon alternée par rapport à l'injection dans les branches froides ou simultanément à cette injection dans les branches froides, on prévoit sur chacune des conduites d'injection principales de chacun des trains une ligne en dérivation vers les branches chaudes pénétrant dans l'enceinte sur laquelle est placée une vanne de sectionnement à l'extérieur de l'enceinte.

Ces lignes d'injection dans les branches chaudes sont généralement regroupées sur des barillets suivant la pression d'injection dans la ligne considérée. Les barillets, comme dans le cas des branches froides, assurent la distribution de l'eau injectée dans les différentes branches chaudes. Ces lignes d'injection peuvent être également regroupées par train pour l'injection dans une branche chaude.

Dans tous les cas, si une rupture se produit au niveau d'un barillet regroupant l'ensemble des conduites principales d'injection dans les branches froides à une certaine pression ou l'ensemble des lignes d'injection dans les branches chaudes à une certaine pression, l'injection de sécurité n'est plus assurée pour la plage de pression correspondant à ce barillet.

Si l'on veut multiplier le nombre des éléments assurant la même fonction, pour accroître la sécurité de fonctionnement du dispositif, la complexité de l'ensemble devient trop importante.

Le but de l'invention est donc de proposer un dispositif d'injection de sécurité d'un réacteur nucléaire à eau sous pression, pour l'injection d'eau de refroidissement dans le circuit primaire, en cas de fuite sur ce circuit, comportant au moins deux trains d'injection séparés constitués chacun par au moins un ensemble de moyen de pompage à une pression donnée de l'eau d'un réservoir, disposé à l'extérieur de l'enceinte de sécurité du réacteur et une conduite d'injection, appelée conduite principale, recevant l'eau en sortie du moyen de pompage, pénétrant dans l'enceinte du réacteur et reliée à un barillet de distribution disposé à l'intérieur de l'enceinte, pour la répartition de l'eau de la conduite principale dans chacune des branches froides du circuit primaire par des conduites de distribution, au moins une vanne de sectionnement étant placée sur la conduite principale, à l'extérieur de l'enceinte et au moins un clapet étant placé sur chacune des conduites de distribution, entre les barillets et les branches froides, ce dispositif d'injection de sécurité devant permettre d'assurer une injection suffisante d'eau de refroidissement dans le circuit primaire, même en cas de rupture d'un élément passif du dispositif de sécurité.

Dans ce but, sur chacune des conduites principales est branchée en dérivation, à l'extérieur de l'enceinte, une conduite auxiliaire pénétrant dans l'enceinte sur laquelle est placée une vanne de sectionnement à l'extérieur de l'enceinte, comportant un embranchement, à l'intérieur de l'enceinte, pour la mise en communication de la conduite auxiliaire, d'une part avec une branche chaude, par l'intermédiaire d'un premier conduit et d'autre part avec une conduite de distribution, par l'intermédiaire d'un second conduit , des clapets étant disposés sur chacun des conduits de l'embranchement.

Afin de bien faire comprendre l'invention, on va maintenant décrire à titre d'exemple non limitatif un dispositif d'injection de sécurité suivant l'art antérieur et un dispositif d'injection de sécurité suivant l'invention.

La fig. 1 est une vue schématique d'un dispositif d'injection de sécurité à deux niveaux de pression selon l'art antérieur pour un réacteur nucléaire à quatre boucles.

La fig. 2 présente de façon schématique un dispositif d'injection de sécurité à deux niveaux de pression selon l'invention, dans le cas d'un réacteur nucléaire à quatre boucles.

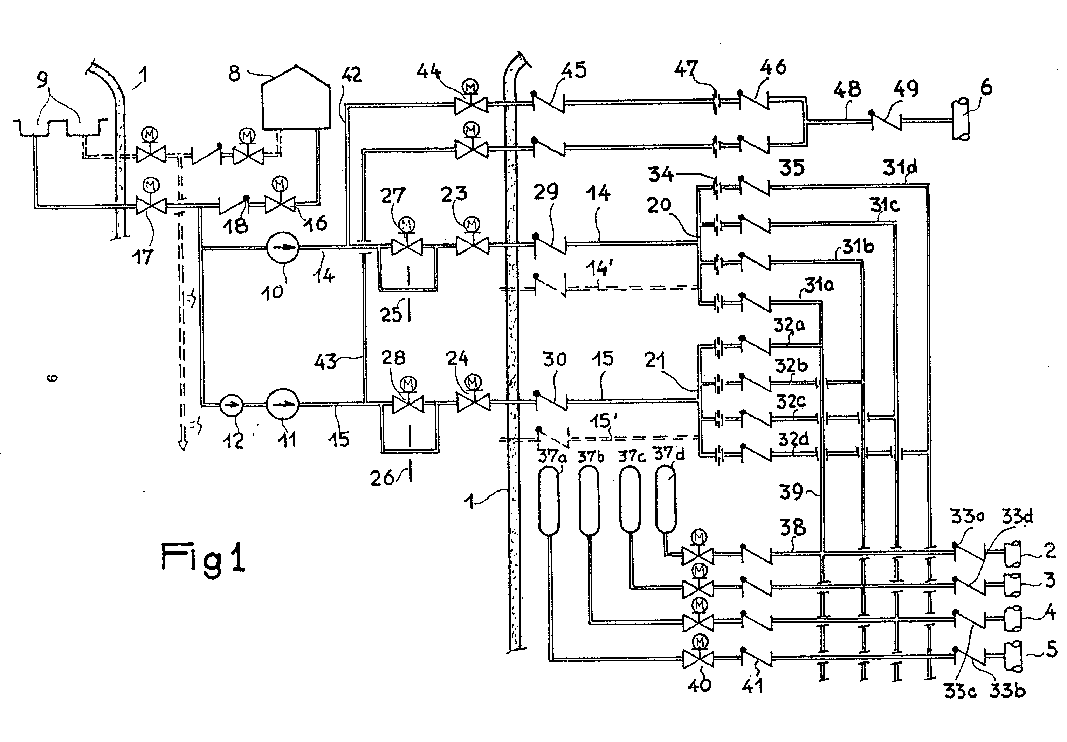

Sur la fig. 1, on voit l'enceinte de sécurité 1 du réacteur à l'intérieur de laquelle est disposée la cuve et le circuit primaire comportant quatre branches froides 2, 3, 4 et 5 et quatre branches chaudes dont une seule 6 a été représentée.

Le dispositif d'injection de sécurité du réacteur comporte deux trains d'injection dont un seul a été représenté en entier et en traits pleins. L'autre train d'injection a été représenté partiellement et en pointillés.

Le dispositif d'injection de sécurité utilise une réserve d'eau constituée d'une part par le réservoir 8 inclus dans le système de stockage et de traitement de l'eau de la piscine du réacteur et par les puisards de recirculation 9 récupérant l'eau d'aspersion à l'intérieur de l'enceinte de sécurité du réacteur et la phase condensée, en cas d'incident sur le circuit primaire.

Chacun des trains d'injection comporte une pompe basse pression 10 et une pompe moyenne pression 11 alimentée par une pompe de gavage 12.

A la sortie de la pompe basse pression 10 l'eau est envoyée dans une conduite d'injection principale 14 et une conduite d'injection principale 15 permet l'injection de l'eau refoulée par la pompe moyenne pression 11.

Des vannes motorisées 16 et 17 permettent de pomper l'eau d'injection soit dans le réservoir 8 soit dans les puisards 9.

Les conduites 14 et 15 traversent l'enceinte de sécurité 1 pour pénétrer à l'intérieur de cette enceinte où elles sont reliées à des barillets 20 et 21 respectivement.

Sur les conduites 14 et 15 respectivement sont disposées à l'extérieur de l'enceinte des vannes de sectionnement 23 et 24 permettant d'alimenter les barillets 20 et 21 ou, au contraire, de fermer la communication entre l'alimentation des conduites 14 et 15 et ces barillets.

Des diaphragmes 25 et 26 disposés sur des branches en dérivation des conduites principales 14 et 15 permettent de répartir le débit dans ces canalisations lorsque les vannes de sectionnement 27 et 28 sont fermées et que l'on est en injection simultanée dans les branches chaudes et froides.

Sur la portion des conduites 14 et 15 disposées à l'intérieur de l'enceinte en amont des barillets 20 et 21 sont placés des clapets anti-retour 29 et 30.

Le second train d'injection représenté de façon partielle et en pointillés, alimenté par le réservoir 8 et les puisards 9, comporte les mêmes éléments que le train représenté, sa conduite 14' alimentée par la pompe basse pression étant reliée au barillet 20 et sa conduite 15' alimentée par la pompe moyenne pression étant reliée au barillet moyenne pression 21.

En sortie des barillets 20 et 21 des conduites de distribution 31a, 31b, 31c et 31d pour le barillet 20, et 32a, 32b, 32c et 32d pour le barillet 21 sont d'une part reliées entre elles et d'autre part reliées à chacune des branches froides 2, 3, 4 et 5 avec interposition de clapets anti-retour 33a, 33b, 33c et 33d.

Sur chacune des conduites de distribution 31 et sur chacune des conduites de distribution 32, en amont de leur point de jonction, sont disposés un orifice de réglage de débit 34 et un clapet anti-retour 35.

Une batterie de quatre accumulateurs 37a à 37d permet une injection dans chacune des branches froides par des conduites de distribution 38 reliées chacune à une conduite de distribution 39 disposée en amont de la jonction entre deux conduites de distribution 31 et 32.

Une vanne de sectionnement 40 et un clapet anti-retour 41 sont disposés sur chacune des conduites de distribution 38 et permettent respectivement d'isoler et de protéger les accumulateurs 37 des branches froides auxquelles ils sont reliés.

L'injection dans les branches chaudes 6 se fait par des lignes d'injection auxiliaires telles que 42 en dérivation sur la conduite 14 et 43 en dérivation sur la conduite 15. Les lignes auxiliaires 42 et 43 sont également équipées de vannes de sectionnement 44, de clapets 45 et 46 et d'un orifice de réglage de débit 47 avant leur réunion dans une conduite d'injection 48 en communication avec la branche chaude et comportant un clapet anti-retour 49.

Dans le cas d'une rupture d'un barillet tel que 20, on voit que le système de pompage de l'injection de sécurité associé à ce barillet devient totalement indisponible puisque les conduites principales d'injection basse pression 14 et 14' sont reliées à ce barillet pour l'injection dans l'ensemble des branches froides du circuit primaire. Or, cela est incompatible avec la sûreté de fonctionnement requise pendant la phase d'injection simultanée en branches froide et chaude.

Il est en effet nécessaire pour remplir la fonction d'injection de sécurité de disposer à terme (24 h après l'accident) de moyens d'injection simultanée branche froide et branche chaude.

Un incident sur un seul élément passif tel que le barillet 20 rend donc indisponible le système d'injection de sécurité basse pression vers les branches froides.

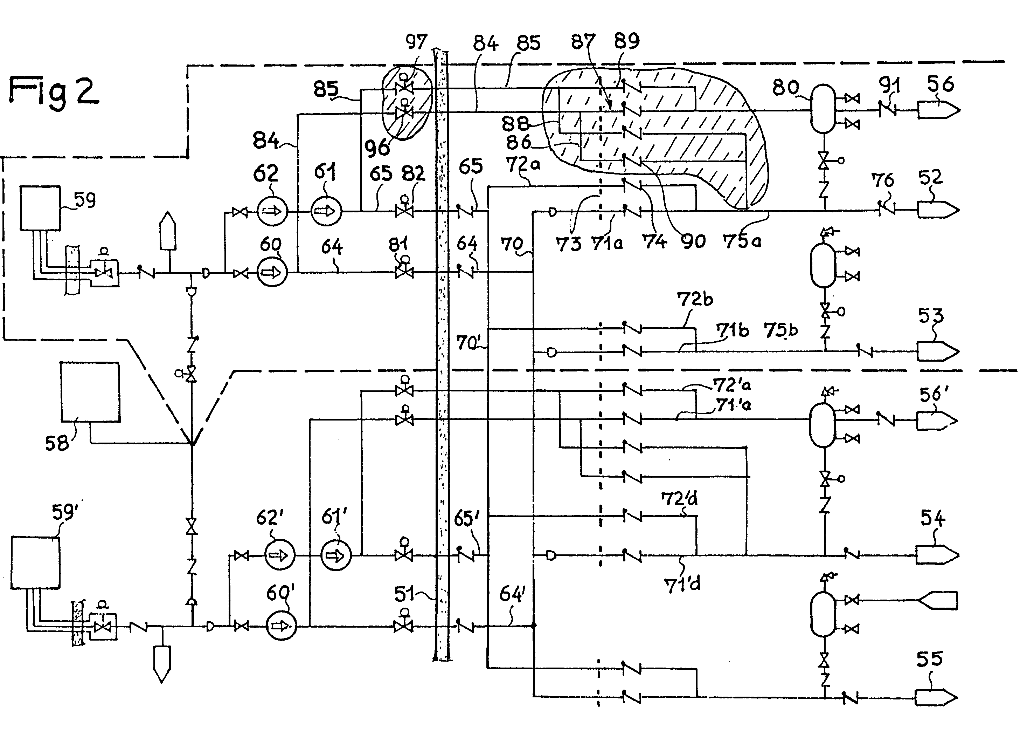

Sur la fig. 2, on voit un dispositif d'injection de sécurité à deux niveaux de pression suivant l'invention, installé hors et dans l'enceinte de sécurité 51 d'un réacteur nucléaire à eau sous pression à quatre boucles.

La partie de droite de la figure correspond aux éléments disposés à l'intérieur de l'enceinte de sécurité 51 et la partie de gauche aux éléments disposés à l'extérieur de cette enceinte. On a représenté sur la fig. 2 les deux trains d'injection constituant le dispositif d'injection de sécurité du réacteur. Ces deux trains sont identiques et les éléments correspondants de l'un et de l'autre seront désignés avec le même repère mais portant pour le second train l'indice '.

Le circuit primaire du réacteur comporte quatre branches froides 52, 53, 54 et 55 et quatre branches chaudes telles que 56 et 56' représentées de façon symbolique sur la fig. 2.

Les deux trains du dispositif d'injection de sécurité sont alimentés à partir du réservoir des piscines 58 et des puisards de recirculation de l'enceinte du réacteur 59 et 59'. Une pompe basse pression 60 et une pompe moyenne pression 61 alimentée par une pompe de gavage 62 permettent d'alimenter les conduites principales d'injection 64 et 65 pénétrant dans l'enceinte de sécurité 51. A l'intérieur de l'enceinte de sécurité 51 les conduites principales basse pression 64 et 64' alimentent un barillet 70 permettant la distribution de l'eau injectée dans les quatre branches froides 52, 53, 54 et 55 alors que les conduites principales moyenne pression 65 et 65' sont reliées à un barillet 70' alimentant également les quatre branches froides.

En sortie des barillets 70 et 70' la répartition de l'eau dans les branches froides se fait par l'intermédiaire de conduites de distribution 71 et 72 respectivement. Sur chacune des conduites de distribution 71 et 72 sont placés un orifice de réglage de débit 73 et un clapet anti-retour 74. En aval des clapets anti-retour 74, la conduite de distribution 72 est reliée à la conduite de distribution 71 pour constituer une conduite d'injection 75 permettant l'injection dans la branche froide correspondante avec interposition d'un clapet anti-retour 76.

Sur chacune des conduites d'injection 75 sont également branchés en dérivation des accumulateurs d'eau sous pression 80 permettant l'injection rapide d'une première quantité d'eau dans les branches froides, en cas d'incident.

A l'extérieur de l'enceinte, sur chacune des conduites principales 64 et 65 respectivement sont placées des vannes de sectionnement 81 et 82 permettant d'isoler les pompes d'injection disposées à l'extérieur de l'enceinte des barillets disposés à l'intérieur de l'enceinte de sécurité 51.

En aval des pompes et en amont des vannes 81 et 82, des conduites auxiliaires 84 et 85 sont placées en dérivation, respectivement sur les conduites principales 64 et 65. Les vannes de sectionnement 96 et 97 sont placées à l'extérieur de l'enceinte 51, respectivement sur les conduites auxiliaires 84 et 85.

Les conduites auxiliaires 84 et 85 pénètrent dans l'enceinte de sécurité 51 et comportent à l'intérieur de l'enceinte chacune un embranchement à deux conduits 86 et 87 pour la conduite 84, et 88 et 89 pour la conduite 85. Sur chacun des deux conduits de chacun des deux embranchements sont placés des clapets anti-retour tels que 90 et des orifices de répartition de débit tels que 73.

Un des conduits de l'embranchement, 86 dans le cas de la conduite auxiliaire 84, et 88 dans le cas de la conduite 85, est relié à la conduite d'injection 75a dans une branche froide, en aval des clapets 74 placés sur les conduites de distribution 71 et 72.

L'autre conduit de l'embranchement, 87 dans le cas de la conduite auxiliaire 84, et 89 dans le cas de la conduite auxiliaire 85, est relié à la branche chaude 56 avec interposition d'un clapet anti-retour 91.

On voit donc qu'en fermant les vannes de sectionnement 81 et 82 sur les conduites principales 64 et 65 et en ouvrant les vannes de sectionnement 86 et 87 sur les conduites auxiliaires 84 et 85, il est possible d'injecter simultanément l'eau de refroidissement dans la branche froide 52 et dans la branche chaude 56, sans passer par les barillets 70 et 71. Le deuxième train identique au premier réalise l'injection dans un autre couple formé d'une branche froide et d'une branche chaude (54-56').

En cas de rupture d'un des embranchements 86, 87 ou 88, 89, le système d'injection de sécurité avec ses deux niveaux de pression, en injection à la fois dans les branches chaudes et dans les branches froides, reste opérationnel grâce à la séparation des trains.

Pour réaliser l'injection simultanée branche froide-branche chaude, il suffit donc d'inverser l'ouverture et la fermeture des vannes 81, 82 d'une part et 96, 97 d'autre part.

Le second train représenté dans la partie inférieure de la fig. 2 est totalement isolé du premier train d'injection et son fonctionnement tout à fait indépendant de celui du premier train peut continuer en cas d'incident sur un des éléments actif ou passif quelconque du premier train d'injection.

Les conduites auxiliaires 84 et 85 et leurs embranchements d'injection sont en effet totalement isolés des barillets auxquels sont reliées les conduites principales des deux trains d'injection. Les clapets anti-retour 74 disposés sur les conduites de distribution 89, 88 et 87, 86 assurent la protection sur rupture d'un des embranchements situés en amont.

On voit donc que les principaux avantages du dispositif suivant l'invention sont que, malgré une grande simplicité de réalisation, il permet de réaliser très simplement l'injection simultanée branche froide-branche chaude et d'éviter tout risque de perte totale d'injection, en cas d'incident sur un de ces éléments actif ou inactif. La manœuvre des vannes d'isolation et de dérivation placées à l'extérieur de l'enceinte est extrêmement facile et le contrôle du bon fonctionnement de ces vannes permet de s'assurer du basculement effectif de l'injection branche froide-branche chaude, après incident.

L'invention ne se limite pas au mode de réalisation qui vient d'être décrit; elle en comporte au contraire toutes les variantes.

C'est ainsi qu'un système de sécurité suivant l'invention peut être adapté aussi bien sur un réacteur à quatre boucles que sur un réacteur à deux ou trois boucles.

L'invention s'applique dans tous les réacteurs nucléaires à eau sous pression quel que soit le nombre de boucles du circuit primaire et le nombre de plages de pression du système d'injection de sécurité comportant au moins deux trains séparés.

## Revendications

1. Dispositif d'injection de sécurité d'un réacteur nucléaire à eau sous pression, pour l'injection d'eau de refroidissement dans le circuit primaire en cas de fuite sur ce circuit, comportant au moins deux trains d'injection séparés constitués chacun par au moins un ensemble de moyens de pompage (60, 61, 62), à une pression donnée, de l'eau d'un réservoir (58, 59), disposé à l'extérieur de l'enceinte de sécurité (51) du réacteur et une conduite d'injection (64, 65) appelée conduite principale recevant l'eau en sortie du moyen de pompage (60, 61, 62) pénétrant dans l'enceinte (51) du réacteur et reliée à un barillet de distribution (70, 70') disposé à l'intérieur de l'enceinte (51) pour la répartition de l'eau des conduites principales (64, 65, 64', 65') dans chacune des branches froides (52, 53, 54, 55) du circuit primaire par des conduites de distribution (71, 72), au moins une vanne de sectionnement (81, 82) étant placée sur chacune des conduites principales (64, 65) à l'extérieur de l'enceinte (51) et au moins un clapet anti-retour (76) étant placé sur chacune des conduites de distribution (71, 72) entre les barillets (70, 70') et les branches froides (52, 53, 54, 55), caractérisé par le fait que sur chacune des conduites principales (64, 65) est branché en dérivation à l'extérieur de l'enceinte (51) une conduite auxiliaire (84, 85) pénétrant dans l'enceinte sur laquelle est placée une vanne de sectionnement (96, 97) à l'extérieur de l'enceinte, comportant un embranchement (86, 87-88, 89), à l'intérieur de l'enceinte (51) pour la mise en communication de la conduite auxiliaire (64, 85) d'une part avec une branche chaude (56, 56'), par l'intermédiaire d'un premier conduit et d'autre part avec une conduite de distribution reliée à une branche froide (52, 53, 54, 55) en aval du clapet (74) disposé sur cette conduite de distribution (71, 72), par l'intermédiaire d'un second conduit, des clapets (90) étant disposés sur chacun des conduits (86, 87, 88, 89) de l'embranchement.

2. Dispositif d'injection de sécurité d'un réacteur nucléaire à eau sous pression, suivant la revendication 1, dans le cas où chacun des trains d'injection est constitué par au moins deux ensembles de moyens de pompage (60, 61, 62) à des pressions différentes, débitant chacun dans une conduite principale (64, 65) reliée à un barillet de distribution choisi parmi au moins deux barillets (70, 70') situés dans l'enceinte (51), suivant la pression de l'eau de la conduite principale (64, 65), caractérisé par le fait que les conduites auxiliaires (84, 85) associées aux conduites principales (64, 65) d'un même train sont reliées au même couple (52, 56) de branches chaudes et froides du circuit primaire.

3. Dispositif d'injection de sécurité suivant l'une quelconque des revendications 1 ou 2 caractérisé par le fait que des orifices de réglage de débit sont disposés sur les deux conduits (86, 87 et 88, 89) de l'embranchement des conduites auxiliaires (84, 85) pour le réglage du débit d'injection dans le couple de branches froide et chaude (52, 56).

4. Dispositif d'injection de sécurité suivant l'une quelconque des revendications 1, 2 et 3, dans le cas d'un réacteur nucléaire à quatre boucles, caractérisé par le fait qu'il comprend deux trains d'injection dont les conduites auxiliaires (84, 85, 84', 85') sont reliées, pour chacun des trains, à un même couple de branches froide et chaude, l'injection par les conduites auxiliaires (84, 85 et 84', 85') des deux trains se faisant dans deux couples différents de branches froide et chaude (52, 56 et 52', 56').

## Patentansprüche

1. Sicherheitseinspeisevorrichtung für einen Druckwasserreaktor zum Einspeisen von Kühlwasser in den Primärkreis im Fall eines Lecks an diesem Kreis, mit wenigstens zwei getrennten Einspeiseanlagen, von denen jede gebildet ist durch wenigstens eine Anordnung von Einrichtungen (60, 61, 62) zum Pumpen von Wasser bei gegebenem Druck aus einem Vorratsbehälter (58, 59), der ausserhalb der Sicherheitshülle (51) des Reaktors angeordnet ist, und durch eine Einspeiseleitung (64, 65), genannt Hauptleitung, die aus der Pumpeinrichtung (60, 61, 62) austretendes Wasser aufnimmt, in die Sicherheitshülle (51) des Reaktors eindringt und mit einer verteilenden Sammelleitung (70, 70') verbunden ist, die innerhalb der Sicherheitshülle (51) angeordnet ist zur Verteilung des Wassers der Hauptleitungen (64, 65, 64', 65') in jeden der kalten Zweige (52, 53, 54, 55) des Hauptkreises über Verteilungsleitungen (71, 72), wobei wenigstens ein Absperrventil (81, 82) in jeder der Hauptleitungen (64, 65) ausserhalb der Sicherheitshülle (51) und wenigstens ein Rückschlagventil (76) in jeder der Verteilungsleitungen (71, 72) zwischen den verteilenden Sammelleitungen (70, 70') und den kalten Zweigen (52, 53, 54, 55) angeordnet sind, dadurch gekennzeichnet, dass an jeder der Hauptleitungen (64, 65) ausserhalb der Sicherheitshülle (51) eine Hilfsleitung (84, 85) abzweigt, die in die Sicherheitshülle eindringt und in der ein Absperrventil (96, 97) ausserhalb der Sicherheitshülle angeordnet ist und die eine Verzweigung (86, 87 und 88, 89) innerhalb der Sicherheitshülle (51) aufweist zur Verbindung der Hilfsleitung (84, 85) einerseits über eine erste Leitung mit einem heissen Zweig (56, 56') und andererseits über eine zweite Leitung mit einer Verteilungsleitung, die mit einem kalten Zweig (52, 53, 54, 55) stromab des Ventils (74) in dieser Verteilungsleitung verbunden ist, wobei in jeder der Leitungen (86, 87, 88, 89) der Verzweigung Ventile (90) angeordnet sind.

2. Sicherheitseinspeisevorrichtung für einen Druckwasserreaktor nach Anspruch 1, für den Fall, dass jede der Einspeiseanlagen aus wenigstens zwei Anordnungen von Pumpeinrichtungen (60, 61, 62) für unterschiedliche Drücke besteht, die jeweils in eine Hauptleitung (64, 65) fördern, die mit einer verteilenden Sammelleitung verbunden ist, die unter wenigstens zwei Sammelleitungen (70, 70') in der Sicherheitshülle (51) ausgewählt ist gemäss dem Druck des Wassers der Hauptleitung (64, 65), dadurch gekennzeichnet, dass die mit den Hauptleitungen (64, 65) derselben Anlage verbundenen Hilfsleitungen (84, 85) mit dem selben Paar (52, 56) von heissen und kalten Zweigen des Primärkreises verbunden sind.

3. Sicherheitseinspeisevorrichtung nach einem der Ansprüche 1 oder 2, dadurch gekennzeichnet, dass die Öffnungen zur Regelung des Durchsatzes in den beiden Leitungen (86, 87 und 88, 89) der Verzweigung der Hilfsleitungen (84, 85) angeordnet sind zur Regelung des Einspeisedurchsatzes in das Paar von kalten und heissen Zweigen (52, 56).

4. Sicherheitseinspeisevorrichtung nach einem der Ansprüche 1, 2 und 3 für den Fall, eines Kernreaktors mit vier Kreislaufsystemen, gekennzeichnet durch zwei Einspeiseanlagen, deren Hilfsleitungen (84, 85, 84', 85') für jede der Anlagen mit demselben Paar von kalten und heissen Zweigen verbunden sind, wobei die Einspeisung durch die Hilfsleitungen (84, 85) und die beiden Anlagen in zwei unterschiedliche Paare von kalten und heissen Zweigen (52, 56 und 52', 56') erfolgt.

**Claims**

1. A device for safety injection of a pressurized-water nuclear reactor, for the injection of cooling water into the primary circuit in the event of leakage in this circuit, including at least two separate injection trains each consisting of at least one set of means (60, 61, 62) of pumping water at a given pressure from a reservoir (58, 59) disposed outside the safety enclosure (51) of the reactor and an injection pipe (64, 65) called the main pipe which receives the water leaving the pumping means (60, 61, 62) and enters the enclosure (51) of the reactor and is connected to a distributor drum (70, 70') disposed inside the enclosure (51) for the distribution of the water from the main pipes (64, 65, 64', 65') into each of the cold branches (52, 53, 54, 55) of the primary circuit through distributor pipes (71, 72), at least one isolating valve (81, 82) being located in each of the main pipes (64, 65) outside the enclosure (51) and at least one check valve (76) being located in each of the distributor pipes (71, 72) between the drums (70, 70') and the cold branches (52, 53, 54, 55), characterized by the fact that to each of the main pipes (64, 65) there is connected outside the enclosure (51) an auxiliary pipe (84, 85) which enters the enclosure and in which is located an isolating valve (96, 97) outside the enclosure, and which has a branching off (86, 87-88, 89) inside the enclosure (51) for putting the auxiliary pipe (84, 85) into communication, firstly, with a hot branch (56, 56') by way of a first pipe and secondly with a distributor pipe connected to a cold branch (52, 53, 54, 55) downstream of the valve (74) arranged in this distributor pipe (71, 72), by way of a second pipe, valves (90) being arranged in each of the pipes (86, 87, 88, 89) of the branching off.

2. A device for safety injection on a pressurized-water nuclear reactor according to claim 1, in the case where each of the injection trains consists of at least two sets of means (60, 61, 62) of pumping at different pressures, each delivering into a main pipe (64, 65) connected to a distributor drum chosen from at least two drums (70, 71') located in the enclosure (51), depending upon the pressure of the water in the main pipe (64, 65), characterized by the fact that the auxiliary pipes (84, 85) associated with the main pipes (64, 65) of the same train are connected to the same pair (52, 56) of hot and cold branches of the primary circuit.

3. A device for safety injection according to claim 1 or 2, characterized by the fact that orifices for flow regulation are arranged in the two pipes (86, 87 and 88, 89) of the branching off from the auxiliary pipes (84, 85) for regulation of the flow of injection into the pair of cold and hot branches (52, 56).

4. A device for safety injection according to any one of the claims 1, 2 and 3, in the case of a nuclear reactor having four loops, characterized by the fact that it comprises two injection trains the auxiliary pipes (84, 85, 84', 85') of which are connected for each of the trains to the same pair of cold and hot branches, the injection through the auxiliary pipes (84, 85 and 84', 85') of the two trains being effected into two different pairs of cold and hot branches (52, 56 and 52', 56').

Fig 1

Fig 2

0 078 192